# EUROPEAN PATENT APPLICATION

(11) **EP 4 113 330 A1**
(43) Date of publication of application: **04.01.2023**
(21) Application number: 22181166.4
(22) Date of filing: 27.06.2022
(51) Int. Cl.: G06F 16/9536, G06Q 30/06

(54) **ITEM OPTION IDENTIFICATION AND SEARCH RESULT PRESENTATION AT A SEARCH ENGINE**

(30) Priority: 01.07.2021 US 202117365633
(71) Applicant: eBay, Inc., San Jose, CA 95125 (US)
(72) Inventor: VANGAPELLI, Santhosh K., San Jose, 95125 (US)
(74) Representative: Müller-Boré & Partner Patentanwälte PartG mbB

(57) **Abstract**

A recommendation engine utilizes deep learning methods, including machine learned neural network models, to identify user group clusters of users having a common purchase history when determining item options, such as an item feature, for a user associated with a search query at a search engine. The determined item options are presented to the user at a search results page or as an item listing as a preselection of selectable options for item options of an item option category, thereby identifying and providing a specific item variation. The search results page can be condensed by excluding items having a same set of item option categories or a same identified item option, thereby providing a search results page or item listing that allows other contextually relevant items to be provided and identified by the user.

## Description

### BACKGROUND

Search engines are used to navigate the Internet or other networks by identifying webpages related to a search query. A search results page is presented in response to a search query, and the search results page includes links to the related webpages. Some search engines are website specific, meaning that the search engine returns search results corresponding to different webpages of the website. This helps users navigate the website by enabling word searches, as opposed to the user having to navigate through a website structure to find a particular webpage or enter a specific URL (Uniform Resource Locator). Other search engines identify search results across the Internet by crawling the Internet, and the related webpages found are presented to the user at the search results page.

### SUMMARY

At a high level, aspects described herein relate to identifying an item option using deep learning and presenting the item options in a manner that condenses a search results page.

Items generally have various models or variations of the item. For instance, a cell phone may have numerous models, each with different features that are item options. The item options are generally part of item option categories, such as a new version of a cell phone having different color and storage options.

To identify an item option for an item option category in response to a search query at a search engine, a trained machine learned model is employed. The trained machine learned model can be trained using known user features and user purchase history for a plurality of users. When employed, the trained machine learned model uses the search query as the input, and it outputs the item option by identifying a user group having a common user history and predicting the item option based on the common user history of the user group. That is, the trained model identifies users similar to the user associated with the search query, and identifies the item options by determining a probability that group members would select the item option based on the user history of the group members, and identifying the item option based on the probability relative to other item options for an item option category.

Once determined, the item option can be presented at a display as a preselection. The item options can be presented as an item listing or as part of a search results page. At the item listing or the search results page, the item option is preselected from among other item options of the item option category, and the item options for the item option category are configured as selectable options with the identified item option already selected. When provided as part of a search results page, the search results page can exclude other item listings comprising the same item option or a same set of item option categories.

The Summary is intended to introduce a selection of concepts in a simplified form that is further described in the Detailed Description of this disclosure. The Summary is not intended to identify key or essential features of the claimed subject matter, nor is it intended to be used as an aid in determining the scope of the claimed subject matter. Additional objects, advantages, and novel features of the technology will be provided, and in part will become apparent to those skilled in the art upon examination of the disclosure or learned through practice of the technology.

### BRIEF DESCRIPTION OF THE DRAWINGS

The present technology is described in detail below with reference to the attached drawing figures, wherein:
FIG. 1 is an operating environment in which an example recommendation engine can be employed, in accordance with an aspect described herein;
FIG. 2 is a graphical user interface generated to provide an example item listing having an item option identified by the recommendation engine of FIG. 1, in accordance with an aspect described herein;
FIG. 3 is another graphical user interface generated to provide an example search results page comprising an item listing having an item option identified by the recommendation engine of FIG. 1, in accordance with an aspect described herein;
FIGS. 4 and 5 are example methods for identifying and presenting an item option using the recommendation engine of FIG. 1, in accordance with aspects described herein; and
FIG. 6 is an example computing device suitable for implementing the described technology, in accordance with an aspect described herein.

### DETAILED DESCRIPTION

Conventional search engines provide search results to users by crawling the web and returning webpages for websites related to a search query. Some search engines return webpages related to the search query that are part of a specific website. Due to the vast and ever-changing nature of the Internet, conventional search engines tend to return large numbers of search results, as there are significantly large numbers of webpages related to a search query.

The large number of potential search results is problematic for search engines and Internet users. In particular, a user can only view so many search results, and only a limited number of search results can be provided at a user interface. For instance, a search for "size 12 shoes" entered into a commonly used search engine at the time of filing this application provided over 850,000,000 related webpages. It is inconceivable that a person could sift through each of these webpages, and there is no possible way to present even a small fraction of the number of websites on a display. Thus, due to the nature of the Internet, how search results are provided at a search results page is critical to the operation of the Internet. Otherwise, the probability of a person finding a contextually related webpage as a search result is near zero, since only a few of the search results can be presented on a display and it is impossible to sift through such large numbers going page by page through the search results, effectively making it impossible to navigate the Internet.

To describe this problem in another way, there are so many potential search results that closely match any given search query, the probability of a user identifying a webpage that is contextually related to the search, but is not an exact match, is near zero because such webpages would be interspersed within the large number of search results and may only first occur deep into the search results ranking. For instance, if the user searched for "size 12 shoes," but would find red sneakers in size 12 to be the most relevant, the user would likely never identify a pair of red sneakers in size 12 because there may be few related webpages interspersed within the 850,000,000 results, and the first related result might be several thousand related webpages down in the ranking of the 850,000,000. Thus, the manner in which a search engine ranks and displays search results is critical to the operation of the Internet, else a user has to provide a search query specific enough to differentiate from, for example, the 850,000,000 results, assuming that such specificity is even possible without knowing the exact contents of the webpage or its URL.

To overcome some aspects of this problem, search engines seek to provide search results in ways that give users the ability to locate the intended webpage. In the context of ecommerce, this includes providing users the ability to locate an intended item stored on an item listing database for an ecommerce website having the search engine. Some methods of providing search results for a user include employing deep learning to better predict the search results related to a search query that are most likely correlated to the user's intent.

Some conventional machine learning techniques in this area, however, are of limited use because, in many cases, there is not enough data about a particular user to accurately predict the user's intent for many possible search queries. To compensate, some unsupervised learning techniques have been employed, but the results may still not be accurate enough to distinguish the best search results from the millions of potential search results.

Another method used to overcome some of these challenges includes specific presentation methods of the search results. Some prior methods provide reranking, or shuffling a top number of search results avoid all the top ranked search results being related to the same webpage or item.

The present technology provides additional mechanisms that can be employed to help overcome these challenges, which are not conventional in the technological field. To overcome some of these challenges, some aspects of the present technology employ deep learning methods that make search result predictions based on a group of similar users, which allows for more accurate predictions using less data about the user associated with the search query when compared to conventional methods. By making more accurate predictions with less user data, the user can be presented with the best of the related search results, thus allowing the user the ability to actually identify an intended search result, such as a webpage or item, and the technology can be employed to more users, including those where there is limited data.

Additionally, the present technology describes presentation methods that provide search results to a user in a condensed fashion, thus allowing additional search results having a different contextual relation to the search query to be presented by excluding similar search results. For instance, some presentation methods provide selectable options, thereby allowing some search results to be excluded and enabling presentation of other contextually related search results.

Moreover, as will be described in more detail, the technology provides for preselecting selectable options using deep learning. By preselecting options using deep learning, the accuracy of identifying the best option for the user is high, thus where there are multiple options presented, a user is less likely to have to drill down within search results to find the best search result, but instead, is presented with the most likely option. In all, this requires the user to provide fewer inputs to reach a final search result, including a webpage or item listing, than would otherwise be required with conventional systems.

In all, by providing preselections, the search system receives fewer inputs from the user, as would be traditionally required to achieve a similar result. From the perspective of the search engine, the search engine is processing fewer commands due to the fewer user inputs. This enhances the efficiency of the computing system employing the search engine because the computing system is now able to process a larger number of search requests from users with the same computational processing ability as before. When employed, the reduced inputs and functions processed in response frees up bandwidth across the network on which the computing system is employed, thus allowing the network to facilitate the processing of more transactions by the system.

One example of the technology that effects these benefits identifies item options and provides the item options as a preselection within an item listing or within a search results page. As noted above, one use of the technology facilitates identifying and providing items as search results to a user. In many cases, items will have multiple variations. These might come in the form of updates to an item over previous items, new models of the item, or an item that is offered having various optional features. This is particularly the case with electronics, where new models and different variations of the models are constantly introduced. In general, item options relate to an item feature, and the item features are usually grouped into item option categories. As an example, a new model of a phone might be introduced having different storage options, color options, camera quality options, size options, battery capacity options and so on. Thus, the storage, color, camera quality, size, and battery capacity are examples of item options categories, while an individual option or feature is an example of an item option associated with the item option category. For instance, 50GB (gigabyte), 100GB, and 150GB would be example of item options within the item option category of storage capacity.

Machine learning can be used to identify item options for a user when a search query is received. In particular, a machine learned model, such as a neural network, can be trained to identify item options as an output based on an input of the search query for the user. The neural network can be trained using a training data set that comprises known user features and user purchase history for a plurality of users. Known user features comprise any identifying aspect of the user, while the user purchase history comprises a stored history of a user's past purchases, including the items purchased and item options for any purchased items. The user purchase history can also include interactions within a website, such as search queries entered, and the user activity following the search query, such the interaction with particular search results of items, and the associated item options and item option categories.

When training a neural network, the neural network is trained to identify similar users. That is, within the plurality of users, users have various user features and user purchase history. The neural network can be trained to identify similar users clustered in the vector space. A cluster of one or more of the similar users is referred to as a user group. The members of the user group, as a result of the training, comprise a common user history. It will be understood, that "common" user history does not imply that the user history is the same, but rather, it is a user history of users within an identifiable cluster.

Having trained the neural network, the neural network can be employed during runtime by inputting a search query of a user, and may also include a known user feature or item option category. The trained neural network outputs item options that have been determined based on the common user history of the user group associated with the user of the search query. That is, the neural network predicts the item option for an item option category based on the purchase history of the user or the purchase history of the group of users having the common history.

The item options determined by the neural network can be presented to the user as a preselection. That is, the item option categories are configured to comprise selectable options for each of the item options in the item option categories, and the item options determined by the trained neural network can be provided as a preselection of the selectable options. Thus, the user could continue navigation using the preselection or select another selectable option. However, using machine learning, the overall likelihood that the user will continue navigation with the preselection is higher, requiring the user to engage in fewer navigation steps. Additionally, but providing the preselection, the preselection can be provided at a search results page, and the search result page be condensed to show more relevant results. That is, since the user is presented with a preselection, but can change the preselection to another item option, the search results page can exclude other search results having the same item option or the same item option categories, thereby helping to duplicate or contextually similar search results that can hinder the user's ability to identify other more relevant results.

It will be realized that the method previously described is only an example that can be practiced from the description that follows, and it has been provided to more easily understand the technology and recognize its benefits. Additional examples are now described with reference to the figures.

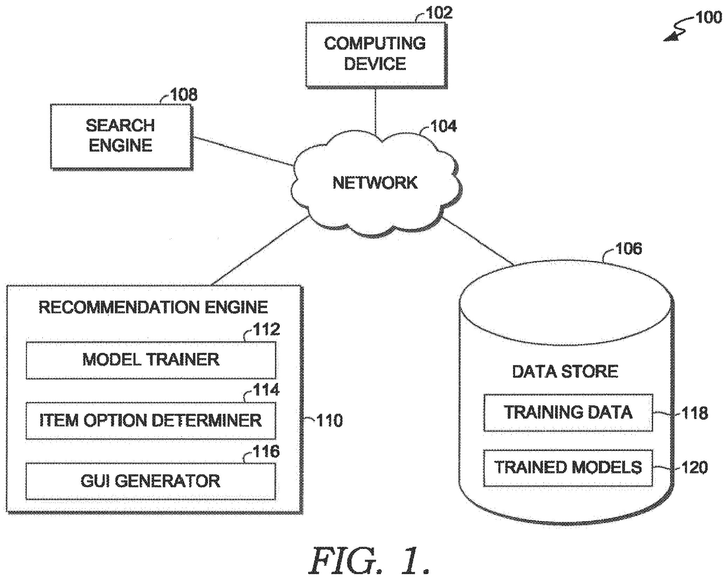

With reference first to FIG. 1, among other components or engines not shown, example operating environment 100 includes computing device 102. Computing device 102 is shown communicating using network 104 to data store 106, search engine 108, and recommendation engine 110.

Network 104 may include one or more networks (e.g., public network or virtual private network "VPN") as shown with network 104. Network 104 may include, without limitation, one or more local area networks (LANs) wide area networks (WANs), or any other communication network or method.

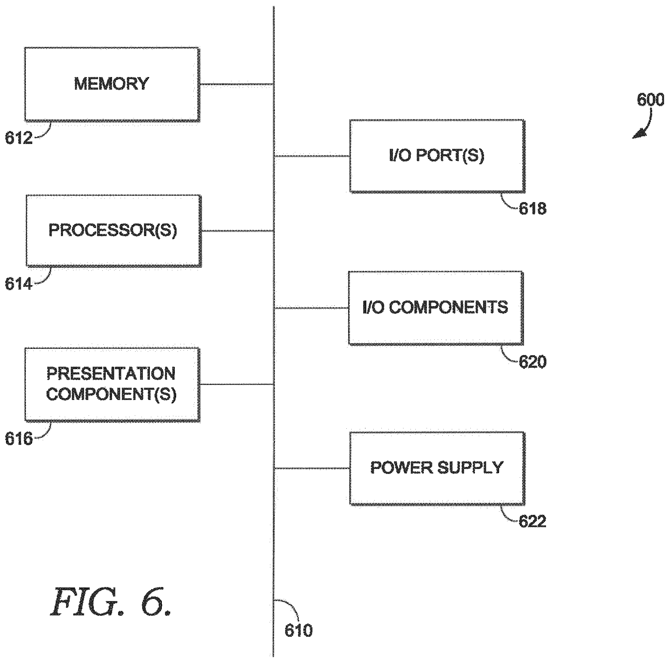

In general, computing device 102 may be a device that corresponds to the computing device 600 described with reference to FIG. 6. In implementations, computing device 102 may be a client-side or front-end device, while in other implementations computing device 102 represents a back-end or server-side device. As will be discussed, computing device 102 may also represent one or more computing devices, and as such, some variations of the technology comprise both a client-side or front-end device, and a back-end or server-side computing device performing one or more functions that will be further described.

Operating environment 100 comprises data store 106. Data store 106 generally stores information including data, computer instructions (e.g., software program instructions, routines, or services), or models used in embodiments of the described technologies. Although depicted as a single database component, data store 106 may be embodied as one or more data stores or may be in the cloud.

Having identified various components of operating environment 100, it is noted again, and emphasized, that any additional or fewer components, in any arrangement, may be employed to achieve the desired functionality within the scope of the present disclosure. Although some components of FIG. 1 are depicted as single components, the depictions are intended as examples in nature and in number, and are not to be construed as limiting for all implementations of the present disclosure. The functionality of operating environment 100 can be further described based on the functionality and features of its components. Other arrangements and elements (e.g., machines, interfaces, functions, orders, groupings of functions, etc.) can be used in addition to or instead of those shown, and some elements may be omitted altogether.

Further, many of the elements described in relation to FIG. 1, such as those described in relation to recommendation engine 110, are functional entities that may be implemented as discrete or distributed components or in conjunction with other components, and in any suitable combination and location. Various functions described herein are being performed by one or more entities and may be carried out by hardware, firmware, or software. For instance, various functions may be carried out by a processor executing computer-executable instructions stored in memory. Moreover, the functions described in relation to FIG. 1 may be performed by computing device 102 at either the front-end, back-end, or in any combination or arrangement.

Search engine 108 generally receives a search query from a computing device 102 and provides search results in response. Search engine 108 may be any type of search engine for a computer network, including a web crawler that returns links to webpages related to the search query from various websites across the network or a search engine specific to a particular website that returns relevant webpages associated with the specific website. In one specific example, an ecommerce website might include a search engine that identifies items related to the search query that are offered for sale by third parties using the website. In this example, the search results might include a list of related items that link to an item listing for the item.

Recommendation engine 110 generally identifies item options using machine learning and provides the identified item options as preselections of selectable options. To do so, the example recommendation engine 110 employs model trainer 112, item option determiner 114, and GUI (graphical user interface) generator 116.

Model trainer 112 generally trains a machine learned model to identify item options. One group of machine learning models suitable for use by the present technology includes neural networks. One specific neural network suitable for use comprises a multilayer perceptron artificial neural network (ANN).

A multilayer perceptron is beneficial in that it can approximate a training function between an input and output target, which can include a search query provided by a user (the input) and an item option for an item associated with the search query (the output). Through its training, the multilayer perceptron learns the association of the input with the target outputs by finding user groups, or clusters of one or more users, that are points having a similar output value. In this way, the training of the multilayer perceptron learns the relationship of one user to the next user in the vector space, where users that are relatively closer within the vector space are more relatively similar in their actions and are used by the trained neural network, such as the trained multilayer perceptron, to predict item options for similar users, including user members of the user group. In this way, the amount of data for on users can be limited, as the trained machine learned model identifies a similar user group of one or more users and can predict the item option based on the user group of similar users.

When training a neural network or other type of machine learning model, model trainer 112 can utilize a training data set, such as training data 118 in data store 106. Training data 118 generally comprises known user features and user purchase history for a plurality of users. The known user features generally comprise any identifying aspect of the user. This could include aspects such as user identification, location, addresses, education, clothing size, occupation, age, gender, and so on. User purchase history could include aspects such as frequency of purchases, items previously purchased, search query history, item returns, price, and so on. The user purchase history may also include item options for previously purchased items, and the item option categories with which the item options are associated.

Using training data 118, model trainer 112 trains a machine learning model to generate a trained machine learned model. Thus, in the specific example that is provided, model trainer 112 trains a multilayer perceptron model to generate a trained multilayer perceptron model. The trained machine learned model may be stored as trained models 120 within data store 106 for use by other components of operating environment 100, including recommendation engine 110.

In general, item option determiner 114 determines an item option by employing the machine learned model from model trainer 112. Item option determiner 114 may receive a search query from search engine 108 for a user associated with the search query, or may receive search results corresponding to relevant items identified by search engine 108. Item option determiner 114 can use the received search query as an input for the trained machine learned model when employing the trained machine learned model retrieved from trained models 120 in data store 106.

Based on the training using the training data set, when employed, the trained machine learned model determines an item option for the user associated with the search query by identifying a user group of one or more users based on group members having a common user history. For instance, the trained machine learned model identifies a cluster of one or more users that is spatially related to the user associated with the search query in the vector space by a threshold distance, wherein the group of users within the cluster are clustered by the machine learned model during training based on the user history associated with each user. By virtue of being identified within the user group, the users have a common user history. The common user history might include common item options for items previously purchased by members of the user group. The machine learned model uses the common user history of the user group to predict item options for a user and member of the group.

When employed by item option determiner 114, the trained machine learned model outputs an item option. The trained machine learned model can be employed independently to determine an item option for each item option category for an item. As noted, items may include item option categories having a plurality of item options within the category. Using an example, a new model cell phone might have an item option category for color, including black and silver as item options, and an item option category for size, such as a large and small screen as item options.

The trained machine learned model may independently determine an item option for the first item option category and an item option for a second item option category. In cases where each item option category is determined independently, item option determiner may also use the item option category as an input. That is, relevant search results for a search query may be determined and can include items relevant to the search query. For an item associated with a relevant search result, the item might include various item option categories. Item option determiner 114 may independently provide each item option category for the item as an input to the machine learned model to output an item option for each item option category.

In another example, item option determiner 114 determines item options by determining a single item model of the item and using features of the single item model as the item options. For instance, item option determiner 114 provides the trained machine learned model a search query to identify an item option for an item related to the search query. The item option identified may be included as part of a particular item model. Based on this, the item model is determined, and an item option for each item option category of the item is determined based on features included in the determined item model. In another example, the trained machine learned model is configured to, i.e., trained by model trainer 112, output a model of an item relevant to the search query, and the item options are determined by item option determiner 114 by identifying an item option for each item option category for the item based on features of the determined item model.

In an aspect, the trained machine learned model determines item options from among a plurality of item options for an item option category by outputting a probability value for each item option, where the probability value indicates the probability of that item being selected by a user based on a user group with a common user history. Put another way, the probability value can indicate a strength of correlation between an item option and the common user history of the user group. The item option having a probability value that indicates a greater probability relative to other item options is selected as the determined item option. In some scenarios, the output of the trained machine learned model may be indeterminate with respect to some of the item options or may indicate more than one item option with a same or similar probability of being selected by the user based on the item options having the same probability value.

In such cases, Thompson sampling may be employed by item option determiner 114 to determine the item option. For instance, using Thompson sampling, one of a set of item options is selected. Feedback is received whether a user associated with the search query chooses the selected item option, for instance, by engaging the search results with the selected item option, purchasing an item having a feature corresponding to the selected item option, or by changing the selected item option to a different item option. Based on the feedback, item option determiner 114 can determine which item option of the set of item options has a greater probability of being selected by a user or by another user within a group of users. Thus, using the values associated with the item options and the Thompson sampling, an item option can be determined and selected for a user in response to a search query.

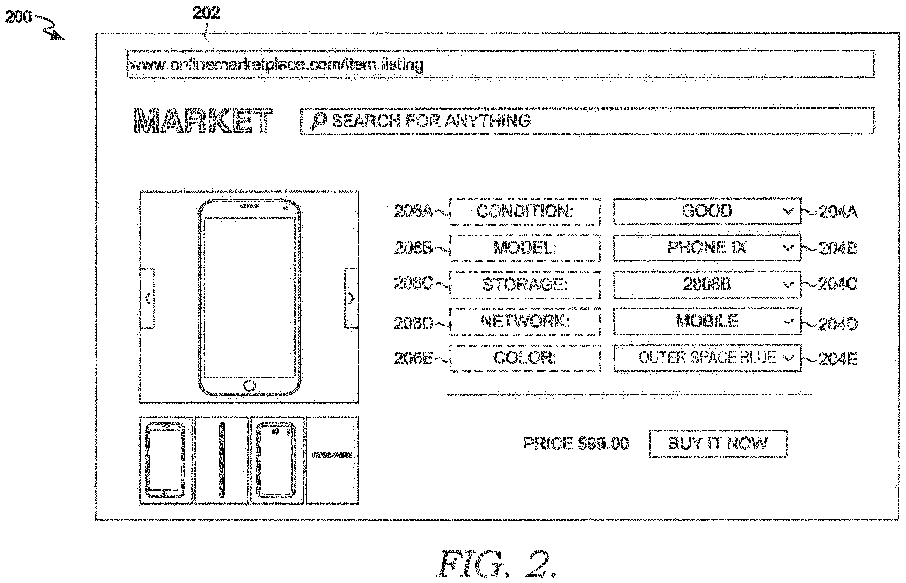

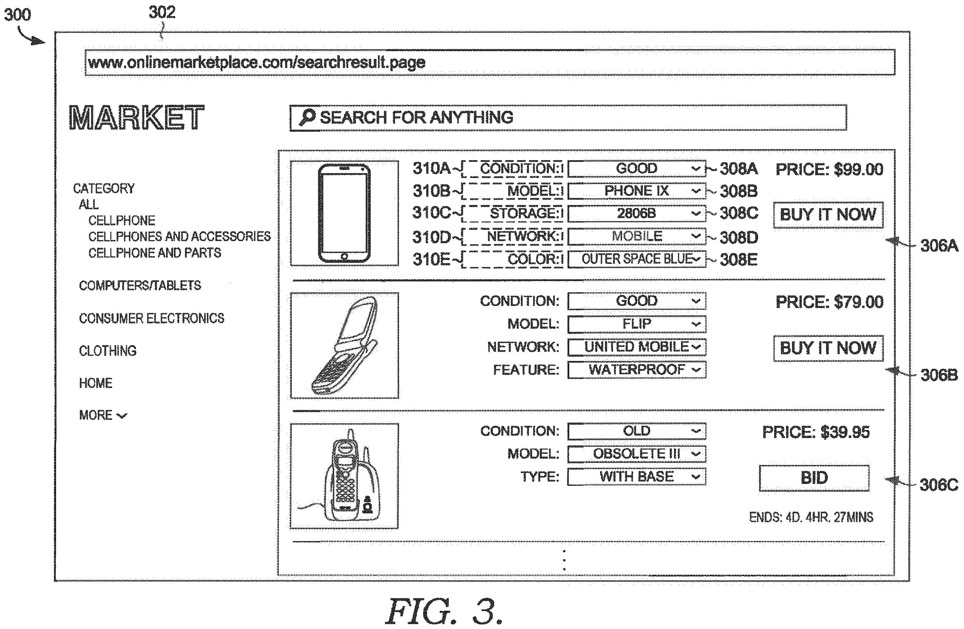

GUI generator 116 generally causes generation of a GUI comprising the item option for display at a display device of computing device 102. That is, GUI generator 116 may provide an item option determined by item option determiner 114 for display. FIG. 2 and FIG. 3 illustrate two example GUIs generated by GUI generator 116. It will be understood that these are examples, and other methods of providing item options may be performed.

In FIG. 2, example GUI 200 is generated by GUI generator 116 and is suitable for display at a display device. Here, GUI generator 116 causes generation of item listing 202. Item listing 202 may be an item listing determined by search engine 108 and provided to recommendation engine 110. As illustrated, item listing 202 has been generated to comprise item options 204A-204E, which respectively correspond to item option categories 206A-206E, meaning that item option 204A is one of a plurality of item options that are within item option category 206A, and so forth.

As illustrated, item options 204A-204E are each presented as a preselection. That is, in the example provided, a user is navigated to a webpage for item listing 202, and each of item options 204A-204E are preselected. The user may be navigated to the webpage for the item listing by selecting a search result at a search results page following input of a search query. Put another way, item option category 206A of item listing 202 has associated with it a plurality of item options. The item options of the plurality maybe selectable options. In this case, item option 204A was determined from item option determiner 114 to be the most likely item option of the plurality with which the user would interact based on the common purchase history of the user group. As such, GUI 200 having item listing 202 is initially presented to the user with the determined item option, item option 204A, for example, preselected from among the plurality of item options. The user could change the preselected item option, such as item option 204A, to any other item option of the plurality of item options associated with item option category 206A. This may be done with one or more of item options 204A-204E, although only one example has been described for brevity. By initially presenting preselected item options at an item listing, the user can view a specific variation or model of the item, as determined through machine learning, in a manner that requires less user interaction and manipulation at the user interface than would otherwise be required with conventional methods, thus streamlining navigation through a website.

FIG. 3 illustrates another example GUI 300 that can be generated using GUI generator 116. GUI 300 comprises search results page 302 that includes search results 304 for a search query provided at a search engine, such as search engine 108.

Search results 304 comprise first through third search results 306A-306C, but it will be understood that any number may be provided at search results page 302. Here, in response to the search query, search results page 302 is provided having items relevant to the search query, the items being provided as search results 304. Using first search result 306A as an example, first search result 306A comprises item options 308A-310E that each respectively correspond to item option categories 310A-310E. For instance, item option category 310A has associated with it a plurality of item options, each of which is provided as a selectable option. In the example provided, item option 308A has been preselected among the item options associated with item option category 310A and provided as a preselection. One or more of item options 308A-308E may be provided at search results page 302 for search results 306A as a preselection for one or more of item option categories 310A.

Search results page 302 may provide a condensed set of search results for the search query using selectable options or preselections. FIG. 3 provides one example. A condensed set of search results may be provided by excluding some search results from search results page 302. As previously discussed, one conventional problem is that the sheer number of relevant items can mean that many contextually related items will not be seen by the user based on conventional presentation. However, by excluding some search results, other contextually relevant search results can be provided and seen by the user, such as second search result 306B and third search result 306C.

In an aspect, search results having a same set of item option categories can be excluded. In this case, search results page 302 may present only one search result for each relevant item that comprises a same set of item option categories. As illustrated, first search result 306A comprises a set of item option categories that includes "condition," "model," "storage," "network," and "color." Thus, another relevant item having the same set of item option categories may be excluded from search results page 302. However, by using selectable options, a user can manipulate the selectable options to view other relevant search results while at search result page 302, for instance, by changing item option 308A to another item option associated with item option category 310A, and so forth. As such, search results page 302 may omit other items that provide the item in a different variation. By doing so, a user is able to view other contextually relevant search results, such as second search result 306B and third search result 306C.

In some aspects, search results, such as search results 304, can be condensed by excluding relevant search results that have a same determined item option by item option determiner 114 for one or more item option categories. For example, search result 306A comprises determined item option 306B. Based on the determined item option 306B, GUI generator may exclude other search results having the item options determined for the user using item option determiner 114. As shown, other relevant items having a determined item option of "Phone IX" for the item option category "Model," which was determined as item option 308B, have been excluded from search results page 302.

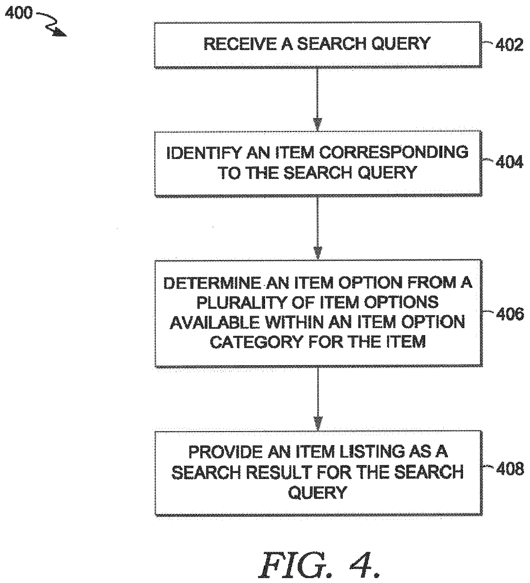

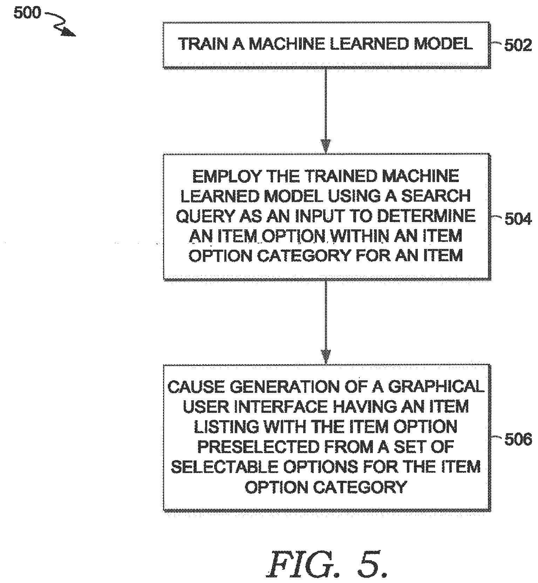

With regard to FIGS. 4 and 5, block diagrams are provided to illustrate example methods for identifying and providing an item option. The methods may be performed using recommendation engine 110 of FIG. 1. In aspects, one or more computer storage media having computer-executable instructions embodied thereon that when executed by at least one processor, cause the at least one processor to perform operations of a method, such as the example methods 400 and 500 of FIGS. 4 and 5.

Referencing now method 400 of FIG. 4, at block 402, a search query is received. The search query may be received from a user providing the search query at search engine 108 from a user-computing device, such as computing device 102. At block 404, an item corresponding to the search query is identified. Search engine 108 may identify relevant items as search results for a search query. Search engine 108 may identify relevant items by querying an item database having an indexed set of item listings and identifying relevant item listings from the item database. In many cases, relevant items identified comprise item option categories that are associated with a plurality of item listing options for various features of an item. A relevant item might comprise variations of the item, each variation having a different set of item options for the item option categories associated with the item.

At block 406, an item option may be determined using item option determiner 114 of recommendation engine 110 from a plurality of item options associated with, e.g., "available within," an item option category for the item identified at block 404. To do so, item option determiner 114 can employ a trained machine learned model to determine the item option for the user associated with the search query. The trained machine learned model may determine the item option based on a user group of users having a common user history, where the user group is determined during the training of the machine learned model to identify a cluster of one or more users as the user group, where the cluster is determined based on the user history of the users, and the inclusion as members of the cluster is based on the one or more users of the user group having a common user history. One class of machine learned models may be neural networks, while one example of a neural network trained as the trained machine learned model is a multilayer perceptron.

In some cases, Thompson sampling may also be used to determine the item option. An item option may be determined for the item or a plurality of item options may be determined for an item. Item options can be determined independently or be based on determining a specific model or variation of the item. When identifying the item option for each of the item option categories, the trained machine learned model may determine a probability value for each item option for each item option category, where the probability value indicates a strength of correlation between each item option and the common user history of the user group. Each item option for each item option category may be determined based on an item option having a greatest probability value within each item option category.

At block 408, the determined item options are provided. The determined item options can be provided to the user-computing device from which the search query was received. The item options may be provided by causing generation of a GUI using GUI generator 116. In some cases, the determined item option is provided on a GUI as a preselection for an item option category. The preselection may be provided as part of a search results page or as part of an item listing. In some cases, other search results are excluded from a search results page, for instance by excluding other identified relevant item listings for variations of the item not provided as the preselected item variation, for instance, by excluding other item listings having a same set of item listing categories or having a same identified item listing option.

Turning now to FIG. 5, method 500 is provided to illustrate another example of identifying and providing an item option. At block 502, a machine learned model is trained. The machine learned model may be a neural network, and in some specific cases, is a multilayer perceptron. The machine learned model may be trained using model trainer 112 of recommendation engine 110 using a training data set. One example training data set includes training data 118 and comprises known user features and user purchase history for a plurality of users.

At block 504, the trained machine learned model from block 502 is employed to determine an item option within an item option category. The trained machine learned model may be employed by item option determiner 114 using a search query input received from a user, where relevant items and item listings for the items are associated with the received search query and identified using search engine 108. Each item may have associated with it a set of item listing categories. The trained machine learned model may be employed to identify an item option for the item listing categories of an item, which can be done independently or by identifying a single item model, e.g., a specific item variation. By virtue of the training, the machine learned model may identify one or more of the item options by identifying a user group having a common user history as the user associated with the search query, and may identify the item options by predicting the item option based on the common user history of the user group. Thompson sampling may also be used to identify the one or more item options.

At block 506, a graphical user interface is caused to be rendered for presenting the item options determined at block 506. GUI generator 116 may be employed to generate the GUI comprising the item options. The GUI may comprise a search results page having item listings for the relevant item, where an item listing provides each determined item option as a preselection for an item option category having selectable options for the item options associated with the item option category. In some case, the item options are presented as a preselection at an item listing in response to the search query.

Having described an overview of embodiments of the present technology, an example operating environment in which embodiments of the present technology may be implemented is described below in order to provide a general context for various aspects. Referring initially to FIG. 6, in particular, an example operating environment for implementing embodiments of the present technology is shown and designated generally as computing device 600. Computing device 600 is but one example of a suitable computing environment and is not intended to suggest any limitation as to the scope of use or functionality of the technology. Neither should computing device 600 be interpreted as having any dependency or requirement relating to any one or combination of components illustrated. Computing device 600 is suitable for performing computerized methods, including the methods or any variation of that have been discussed, using one or more processors.

The technology of the present disclosure may be described in the general context of computer code or machine-useable instructions, including computer-executable instructions such as program modules, being executed by a computer or other machine, such as a personal data assistant or other handheld device. Generally, program modules including routines, programs, objects, components, data structures, etc. refer to code that perform particular tasks or implement particular abstract data types. The technology may be practiced in a variety of system configurations, including hand-held devices, consumer electronics, general-purpose computers, more specialty computing devices, etc. The technology may also be practiced in distributed computing environments where tasks are performed by remote-processing devices that are linked through a communications network.

With reference to FIG. 6, computing device 600 includes bus 610 that directly or indirectly couples the following devices: memory 612, one or more processors 614, one or more presentation components 616, input/output ports 618, input/output components 620, and illustrative power supply 622. Bus 610 represents what may be one or more busses (such as an address bus, data bus, or combination thereof). Although the various blocks of FIG. 6 are shown with lines for the sake of clarity, in reality, delineating various components is not so clear, and metaphorically, the lines would more accurately be grey and fuzzy. For example, one may consider a presentation component, such as a display device, to be an I/O component. As another example, processors may also have memory. Such is the nature of the art, and it is again reiterated that the diagram of FIG. 6 is merely illustrates an example computing device that can be used in connection with one or more embodiments of the present technology. Distinction is not made between such categories as "workstation," "server," "laptop," "hand-held device," etc., as all are contemplated within the scope of FIG. 6 and reference to "computing device."

Computing device 600 typically includes a variety of computer-readable media. Computer-readable media can be any available media that can be accessed by computing device 600 and includes both volatile and nonvolatile media, and removable and non-removable media. By way of example, and not limitation, computer-readable media may comprise computer storage media and communication media.

Computer storage media include volatile and nonvolatile, removable and non-removable media implemented in any method or technology for storage of information, such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 600. Computer storage media excludes signals per se.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared, and other wireless media. Combinations of any of the above should also be included within the scope of computer-readable media.

Memory 612 includes computer storage media in the form of volatile or nonvolatile memory. The memory may be removable, non-removable, or a combination thereof. Example hardware devices include solid-state memory, hard drives, optical-disc drives, etc. Computing device 600 includes one or more processors that read data from various entities such as memory 612 or I/O components 620. Presentation component(s) 616 present data indications to a user or other device. Examples of presentation components include a display device, speaker, printing component, vibrating component, etc.

I/O ports 618 allow computing device 600 to be logically coupled to other devices including I/O components 620, some of which may be built in. Illustrative components include a microphone, joystick, game pad, satellite dish, scanner, printer, wireless device, and so forth.

Embodiments described above may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of the present technology is described with specificity herein to meet statutory requirements. However, the description itself is not intended to limit the scope of this disclosure. Rather, the inventors have contemplated that the claimed or disclosed subject matter might also be embodied in other ways, to include different steps or combinations of steps similar to the ones described in this document, in conjunction with other present or future technologies. Moreover, although the terms "step" or "block" might be used herein to connote different elements of methods employed, the terms should not be interpreted as implying any particular order among or between various steps herein disclosed unless and except when the order of individual steps is explicitly stated.

For purposes of this disclosure, the word "including" or "having" has the same broad meaning as the word "comprising," and the word "accessing" comprises "receiving," "referencing," or "retrieving." Further the word "communicating" has the same broad meaning as the word "receiving" or "transmitting" facilitated by software or hardware-based buses, receivers, or transmitters using communication media. Also, the word "initiating" has the same broad meaning as the word "executing" or "instructing" where the corresponding action can be performed to completion or interrupted based on an occurrence of another action.

In addition, words such as "a" and "an," unless otherwise indicated to the contrary, include the plural as well as the singular. Thus, for example, the constraint of "a feature" is satisfied where one or more features are present. Furthermore, the term "or" includes the conjunctive, the disjunctive, and both (*a* or *b* thus includes either *a* or *b,* as well as *a* and *b*).

For purposes of a detailed discussion above, embodiments of the present technology described with reference to a distributed computing environment; however, the distributed computing environment depicted herein is merely an example. Components can be configured for performing novel aspects of embodiments, where the term "configured for" or "configured to" can refer to "programmed to" perform particular tasks or implement particular abstract data types using code.

From the foregoing, it will be seen that this technology is one well adapted to attain all the ends and objects described above, including other advantages that are obvious or inherent to the structure. It will be understood that certain features and subcombinations are of utility and may be employed without reference to other features and subcombinations. This is contemplated by and is within the scope of the claims. Since many possible embodiments of the described technology may be made without departing from the scope, it is to be understood that all matter described herein or illustrated the accompanying drawings is to be interpreted as illustrative and not in a limiting sense.

Some example aspects of the technology that may be practiced from the forgoing disclosure include the following:
Aspect 1: A computerized method performed by one or more processors for providing an item option, the method comprising: receiving a search query at a search engine, the search query received from a user-computing device; identifying an item corresponding to the search query, the item being associated with item listings within an item database, wherein the item listings include different item options; determining an item option from a plurality of item options available within an item option category for the item, the item option being determined based on a user group having a common user history; and providing to the user-computing device an item listing from the item database as a search result for the search query, the item listing having the item with the item option.
Aspect 2: Aspect 1, further comprising presenting at the search engine the plurality of item options as a set of selectable options for the item option category, the item option being presented as a preselection from the set of selectable options.
Aspect 3: Any of Aspects 1-2, further comprising training a neural network using known users features and user purchase history of a plurality of users, wherein the item option is determined by employing the trained neural network to identify the user group having the common user history and to predict the item option based on the common user history of the user group.
Aspect 4: Any of Aspects 1-3, wherein determining the item option comprises performing Thompson sampling to select the item option from among items options identified for the user group.
Aspect 5: Any of Aspects 1-4, wherein the item is associated with a plurality of item option categories, each item option category comprising item options, and wherein the method further comprises determining one item option for each item option category.
Aspect 6: Aspect 5, wherein determining the one item option for each item option category includes employing a trained neural network to determine a probability value for each item option indicating a strength of correlation between each item option and the common user history of the user group, the one item option having a greatest probability value within each item option category.
Aspect 7: Any of Aspects 5-6, wherein the one item option for each item option category is independently determined.
Aspect 8: Any of Aspects 1-7, wherein the item listing is provided as part of a search results page, wherein the search results page excludes other item listings for the item having the item option.
Aspect 9: One or more computer storage media storing computer-readable instructions that when executed by a processor, cause the processor to perform operations for providing an item option, the operations comprising: training a machine learned model using a training data set comprising known user features and user purchase history for a plurality of users; employing the trained machine learned model using a search query as an input to determine an item option within an item option category for an item, the trained machine learned model employed to determine the item option for a user associated with the search query by identifying a user group having a common;user history and predicting the item option based on the common user history of the user group; and causing generation of a graphical user interface comprising an item listing for the item, the item listing having a set of selectable options for the item option category associated with the item option, the item option determined from employing the trained machine learned model being presented as a preselection from the set of selectable options.
Aspect 10: Aspect 9, wherein the neural network is a multilayer perceptron.
Aspect 11: Any of Aspects 9-10, further comprising performing Thompson sampling on item options of the item option category, wherein the item option is further determined based on the Thompson sampling.
Aspect 12: Any of Aspects 9-11, wherein the item is associated with a plurality of item option categories, each item option category comprising item options, and wherein the method further comprises determining one item option for each of the item option categories by employing the trained machine learned model.
Aspect 13: Aspect 12, wherein the one item option for each of the item option categories is independently determined.
Aspect 14: Any of Aspects 12-13, wherein the one item option for each of the item option categories is determined based on features of a single item model of the item.
Aspect 15: Any of Aspects 9-14, wherein the item listing is presented as part of a search results page, the search results page excluding other item listings for the item having the item option based on the set of selectable options.
Aspect 16: A system for providing an item option, the system comprising: at least one processor; and one or more computer storage media storing computer-readable instructions that when executed by the at least one processor, cause the at least one processor to perform a method comprising: receiving a search query from a search engine; employing a trained machine learned model using the search query as an input to determine an item option within an item option category for an item, the trained machine learned model being trained on a training data set comprising known user features and user purchase history for a plurality of users, wherein the trained machine learned model determines the item option by identifying a user group having a common user history and predicting the item option based on the common user history of the user group; and causing generation of a graphical user interface for presentation by the search engine, the graphical user interface comprising an item listing for the item, the item listing having a set of selectable options for the item option category associated with the item option, the item option determined from employing the trained machine learned model being presented as a preselection from the set of selectable options.
Aspect 17: Aspect 16, wherein the machine learned model is a neural network.
Aspect 18: Any of Aspects 16-17, wherein the item is associated with a plurality of item option categories, each item option category comprising item options, and wherein the method further comprises determining one item option for each of the item option categories by employing the trained machine learned model.
Aspect 19: Aspect 18, wherein the one item option for each of the item option categories is independently determined.
Aspect 20: Any of Aspects 18-19, wherein the one item option for each of the item option categories is determined based on features of a single item model of the item.

## Claims

1. A computerized method performed by one or more processors for providing an item option, the method comprising:
receiving a search query at a search engine, the search query received from a user-computing device;
identifying an item corresponding to the search query, the item being associated with item listings within an item database, wherein the item listings include different item options;
determining an item option from a plurality of item options available within an item option category for the item, the item option being determined based on a user group having a common user history; and
providing to the user-computing device an item listing from the item database as a search result for the search query, the item listing having the item with the item option.

2. The method of claim 1, further comprising presenting at the search engine the plurality of item options as a set of selectable options for the item option category, the item option being presented as a preselection from the set of selectable options.

3. The method of claim 1 or 2, further comprising training a neural network using known users features and user purchase history of a plurality of users, wherein the item option is determined by employing the trained neural network to identify the user group having the common user history and to predict the item option based on the common user history of the user group.

4. The method of any one of claims 1 to 3, wherein determining the item option comprises performing Thompson sampling to select the item option from among items options identified for the user group.

5. The method of claim 1, wherein the item is associated with a plurality of item option categories, each item option category comprising item options, and wherein the method further comprises determining one item option for each item option category;
wherein determining the one item option for each item option category may include employing a trained neural network to determine a probability value for each item option indicating a strength of correlation between each item option and the common user history of the user group, the one item option having a greatest probability value within each item option category; and
wherein the one item option for each item option category may be independently determined.

6. The method of any one of claims 1 to 5, wherein the item listing is provided as part of a search results page, wherein the search results page excludes other item listings for the item having the item option.

7. One or more computer storage media storing computer-readable instructions that when executed by a processor, cause the processor to perform operations for providing an item option, the operations comprising:
training a machine learned model using a training data set comprising known user features and user purchase history for a plurality of users;
employing the trained machine learned model using a search query as an input to determine an item option within an item option category for an item, the trained machine learned model employed to determine the item option for a user associated with the search query by identifying a user group having a common user history and predicting the item option based on the common user history of the user group; and
causing generation of a graphical user interface comprising an item listing for the item, the item listing having a set of selectable options for the item option category associated with the item option, the item option determined from employing the trained machine learned model being presented as a preselection from the set of selectable options.

8. The media of claim 7, wherein the neural network is a multilayer perceptron.

9. The media of claim 7 or 8, further comprising performing Thompson sampling on item options of the item option category, wherein the item option is further determined based on the Thompson sampling.

10. The media of any one of claims 7 to 9, wherein the item is associated with a plurality of item option categories, each item option category comprising item options, and wherein the method further comprises determining one item option for each of the item option categories by employing the trained machine learned model;
wherein the one item option for each of the item option categories may be independently determined;
wherein the one item option for each of the item option categories may be determined based on features of a single item model of the item.

11. The media of any one of claims 7 to 10, wherein the item listing is presented as part of a search results page, the search results page excluding other item listings for the item having the item option based on the set of selectable options.

12. A system for providing an item option, the system comprising:
at least one processor; and
one or more computer storage media storing computer-readable instructions that when executed by the at least one processor, cause the at least one processor to perform a method comprising:
receiving a search query from a search engine;
employing a trained machine learned model using the search query as an input to determine an item option within an item option category for an item, the trained machine learned model being trained on a training data set comprising known user features and user purchase history for a plurality of users, wherein the trained machine learned model determines the item option by identifying a user group having a common user history and predicting the item option based on the common user history of the user group; and
causing generation of a graphical user interface for presentation by the search engine, the graphical user interface comprising an item listing for the item, the item listing having a set of selectable options for the item option category associated with the item option, the item option determined from employing the trained machine learned model being presented as a preselection from the set of selectable options.

13. The system of claim 12, wherein the machine learned model is a neural network.

14. The system of claim 12 or 13, wherein the item is associated with a plurality of item option categories, each item option category comprising item options, and wherein the method further comprises determining one item option for each of the item option categories by employing the trained machine learned model.

15. The system of claim 14, wherein the one item option for each of the item option categories is independently determined; and/or
wherein the one item option for each of the item option categories is determined based on features of a single item model of the item.
